# EUROPÄISCHE PATENTSCHRIFT

(11) **EP 1 469 366 B1**
(45) Veröffentlichungstag und Bekanntmachung des Hinweises auf die Patenterteilung: **29.11.2006**
(21) Anmeldenummer: 04002639.5
(22) Anmeldetag: 06.02.2004
(51) Int. Cl.: G05D 23/02

(54) **Ventil für Heizungsanlagen**
Valve for heating system
Robinet pour installation de chauffage

(30) Priorität: 21.02.2003 DE 10307359
(43) Veröffentlichungstag der Anmeldung: 20.10.2004
(73) Patentinhaber: U.S.H.-Innovationen GmbH, 33758 Schloss Holte-Stukenbrock (DE)
(72) Erfinder: Schroeder, Ulrich, 33415 Verl (DE); Henkenjohann, Walter, 33415 Verl (DE)
(74) Vertreter: TER MEER - STEINMEISTER & PARTNER GbR

(56) Entgegenhaltungen:
- DE-U1- 20 203 735
- DE-U1- 29 805 473
- GB-A- 1 152 381

## Beschreibung

Die Erfindung betrifft ein Ventil nach dem Oberbegriff des Anspruchs 1.

Ein Ventil der als bekannt vorausgesetzten Art (DE 202 03 735 U1) mit einem Kombifühlerkopf ermöglicht bereits eine unabhängige Einstellung von Raumtemperaturfühler und Rücklauftemperaturfühler. Der Rücklauftemperaturfühler wird durch einen Stellring bei der Montage auf eine vorgegebene für den geregelten Heizkreislauf verträgliche Wassertemperatur eingestellt. Der Stellring ist für einen Benutzer häufig nicht mehr ohne weiteres zugänglich und für die Verstellung der Rücklauftemperatur durch einen Benutzer nicht geeignet. Die Raumtemperatur wird jeweils ausschließlich am Raumtemperaturfühler verändert. Ein derartiges Ventil hat den Nachteil, daß der regelbare Raumtemperaturbereich eingeschränkt wird. Beispielsweise kann bei extremen Witterungsverhältnissen, bei denen der Raumtemperaturfühler auf die höchste Temperaturstufe eingestellt wird, die entsprechende Raumtemperatur nicht erreicht werden, weil die Rücklauftemperatur dafür zu niedrig ist.

Der Erfindung liegt die Aufgabe zugrunde, die Bedienung eines Ventils mit Kombifühlerkopf zu verbessern und dessen Einsatzbereich zu vergrößern.

Die Aufgabe wird durch die Merkmale des Patentanspruchs 1 gelöst.

Durch die Einstellhülse kann die Rücklauftemperatur von einem Benutzer auf einfache Weise eingestellt werden. Dadurch vergrößert sich der verstellbare Temperaturbereich des Ventils und die Raumtemperatur lässt sich gegebenenfalls schneller erreichen. Die Einstellhülse kann mit die Einstellung erleichternden Hinweisen und Einstellzeichen versehen sein.

In einer besonders vorteilhaften Ausführung des Ventils kann die Verstellung des Raumtemperaturfühlers mit der des Rücklauftemperaturfühlers gekoppelt sein. Dadurch entfällt für den Benutzer die separate Betätigung des Rücklauftemperaturfühlers, ohne dass der Einsatzbereich des Ventils verkleinert wird. Eine derartige Kopplung kann durch feste Verbindung der Einstellelemente erreicht werden, wobei unterschiedliche Stellhübe durch unterschiedliche Gewindesteigungen der Fühlerverstellelemente auf einfache Weise ermöglicht wird.

In weitere Ausgestaltung der Erfindung kann das Ventil schwenkbar ausgebildet sein oder unterschiedliche Anschlussstutzen aufweisen, so dass es in unterschiedlichen Einbaulagen verwendet werden kann. Mit entsprechenden Anschlussstücken lassen sich mit einem solchen Ventil auch mehrere Heizkreise gleichzeitig regeln.

Weitere vorteilhafte Ausgestaltungen der Erfindung ergeben sich aus den Unteransprüchen.

Im folgenden werden zwei Ausführungsbeispiele der Erfindung anhand der Zeichnungen näher erläutert. Es zeigen:
- Figur 1 -: eine perspektivische Ansicht eines zwischen Anschlussstücken angeordneten Ventils mit einem Kombifühlerkopf;
- Figur 2 -: einen Schnitt entlang der Mittenebene des Ventils in einer ersten Ausführungsform mit in die Mittenebene geschwenktem Kombifühlerkopf nach Fig. 1;
- Figur 3 -: einen Schnitt gemäß Fig. 2 durch ein Ventil in einer zweiten Ausführungsform;
- Figur 4a -: eine perspektivische Ansicht des Ventilkörpers mit Ein- und Auslassstücken gemäß Fig. 2 und 3;
- Figur 4b -: eine perspektivische Ansicht des Ventilkörpers mit Ein- und Auslassstücken gemäß Fig. 4a mit nach vorn geklapptem Anschlussstutzen gemäß Fig. 1;
- Figur 4c -: eine perspektivische Ansicht des Ventilkörpers mit Ein- und Auslassstücken gemäß Figur 4a mit dem Anschlussstutzen in Absperrstellung;
- Figur 5a -: eine perspektivische Ansicht des Ventilkörpers nach Fig. 4a;
- Figur 5b -: eine Draufsicht auf den Ventilkörper nach Fig. 5a;
- Figur 5c -: einen Schnitt durch den Ventilköper entlang der Schnittebene Vc - Vc in Fig. 5b;
- Figur 5d -: einen Schnitt durch den Ventilkörper entlang der Schnittebene Vd - Vd in Fig. 5b.

In den Zeichnungen sind gleiche Teile mit gleichen Bezugszeichen versehen, die sich im Bedarfsfall durch Hochstriche voneinander unterscheiden.

Ein Ventil zur Regelung von Heizungsanlagen weist einen Kombifühlerkopf auf, der einen Raumtemperaturfühler 2 und einen Rücklauftemperaturfühler 3 in koaxialer Anordnung umfasst. Der Kombifühlerkopf ist an einem Ventilgehäuse 1 befestigt, das schwenkbar auf einer Seite in einem Einlass-Anschlussstück 4 und auf der anderen Seite in einem Auslass-Anschlussstück 5 aufgenommen ist. An dem Einlass-Anschlussstück 4 können zwei Heizkreise in Einlassbohrungen 4a und an dem Auslass-Anschlussstück 5 in Auslassbohrungen 5a angeschlossen werden.

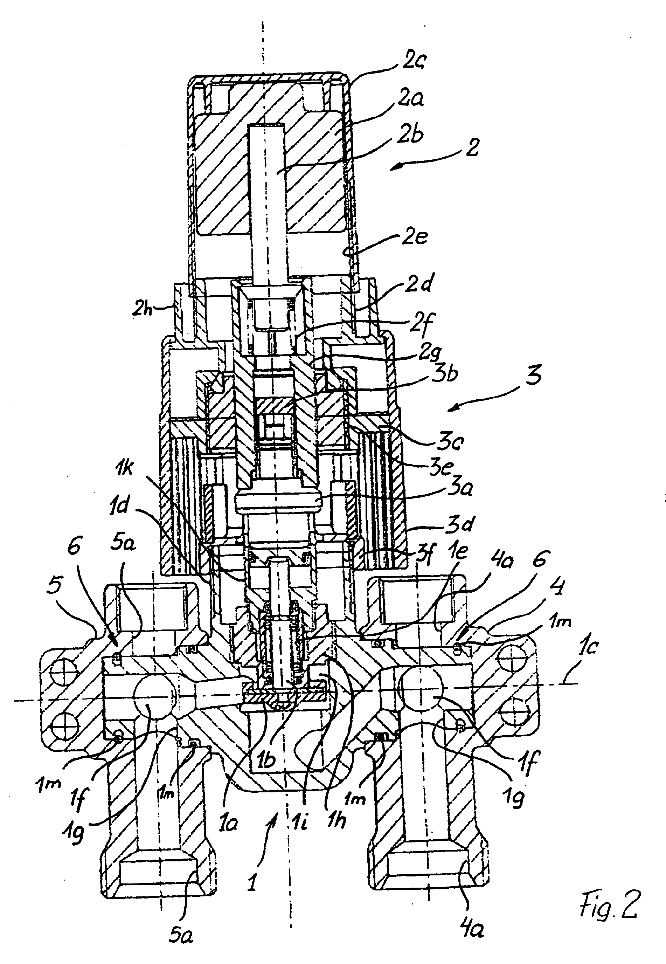

Bei einer ersten Ausführungsform des Ventils gemäß Fig. 2 ist der Raumtemperaturfühler 2 im wesentlichen in einer um seine Längsachse drehbaren Einstellkappe 2c und der Rücklauftemperaturfühler 3 in einer demgegenüber drehbaren Einstellhülse 3d untergebracht. Der Raumtemperaturfühler 2 ist von allgemein bekannter Bauart und daher hier nicht im einzelnen dargestellt. Er weist einen Dehnkörper 2a auf, der ein Druckglied 2b beaufschlagt. Der Raumtemperaturfühler 2 ist mit einem an seiner Einstellkappe 2c vorgesehenen Gegengewinde 2e auf ein Gewinde 2d am Rücklauftemperaturfühler 3 aufgeschraubt.

Der Rücklauftemperaturfühler 3 besitzt ebenfalls einen Dehnkörper 3a, der sich koaxial zu dem Druckglied 2b erstreckt und sich an einem Widerlager 3b abstützt, das mittels einer Gewindeverbindung 3e in einem Stellring 3c gehalten wird. Das Widerlager 3b ist an einer Drehung gehindert. Der Außenumfang des Stellrings 3c ist mit der Einstellhülse 3d verbunden. Eine Drehung der Stellhülse 3d führt daher zu einer Verlagerung des Widerlagers 3b und des sich daran abstützenden Dehnkörpers 3a in Richtung der Drehachse der Einstellhülse 3d. Das Widerlager 3b wird von einem geschlitzten Übertragungsglied 2g durchsetzt, an dessen einen Ende das Druckglied 2b über eine Ausgleichsfeder 2f angreift. Das andere Ende des Übertragungsgliedes 2g stützt sich an dem Dehnkörper 3a ab. Der Kombifühlerkopf ist mittels eines Gewinderings 3f an einem Anschlussstutzen 1d des Ventilgehäuses 1 befestigt.

An dem vom Widerlager 3b abgewandten Ende des Dehnkörpers 3a liegt ein Ventilschaft 1b an, der einen Ventilteller 1a trägt. Der Ventilschaft 1b ist in einer Stopfbuchse 1h aufgenommen, die in das Ventilgehäuse 1 eingeschraubt ist und eine Ventilkammer 1i verschließt. Der Ventilschaft 1b und der Ventilteller 1a sind mit einer Rückstellfeder 1e entgegen der Sperrrichtung des Ventils vorgespannt. In die Stopfbuchse 1h ist ein Wärmeleitelement 1k eingeschraubt, das den Dehnkörper 3a teilweise umschließt. Auf diese Weise wird die Temperatur der durch eine Durchgangsbohrung 1g zu- bzw. abgeführten Heizflüssigkeit auf den Dehnkörper 3a übertragen.

Bei einer Drehung des Raumtemperaturfühlers 2 zu niedrigeren Raumtemperaturen wird das Druckglied 2b in Richtung des Ventilgehäuses 1 verschoben. Über die Ausgleichsfeder 2f wird das Übertragungsglied 2g mitgenommen, solange der Ventilteller 1a seine Schließstellung nicht erreicht hat. Ist das Ventil bereits geschlossen, so wird lediglich die Ausgleichsfeder 2f zusammengedrückt. Das Übertragungsglied 2g verschiebt den Dehnkörper 3a, der seine Verlagerung auf den Ventilschaft 1b überträgt, so dass der Durchflussquerschnitt der Ventilkammer 1i verringert wird. Dabei wird die Rückstellfeder 1e gespannt. Eine Erhöhung der Raumtemperatur wirkt durch die Ausdehnung des Dehnkörpers 2a in gleicher Weise.

Die Rücklauftemperatur der Heizflüssigkeit kann durch verdrehen der Einstellhülse 3d eingestellt werden. Die Drehung des Stellrings 3c bewirkt eine Verlagerung des Widerlagers 3b, so dass der Ventilteller 1a in der einen Richtung über den am Ventilschaft 1b anliegenden Dehnkörper 3a oder in der Gegenrichtung durch die Rückstellfeder 1e verlagert wird. Wenn die Heizflüssigkeit den eingestellten Wert überschreitet, dehnt sich der Dehnkörper 3a aus und schließt das Ventil. Während der Abkühlung des Dehnkörpers 3a wird der Ventilschaft 1b durch die Rückstellfeder 1e an dem Dehnkörper 3a anliegend gehalten, so dass das Ventil wieder öffnet.

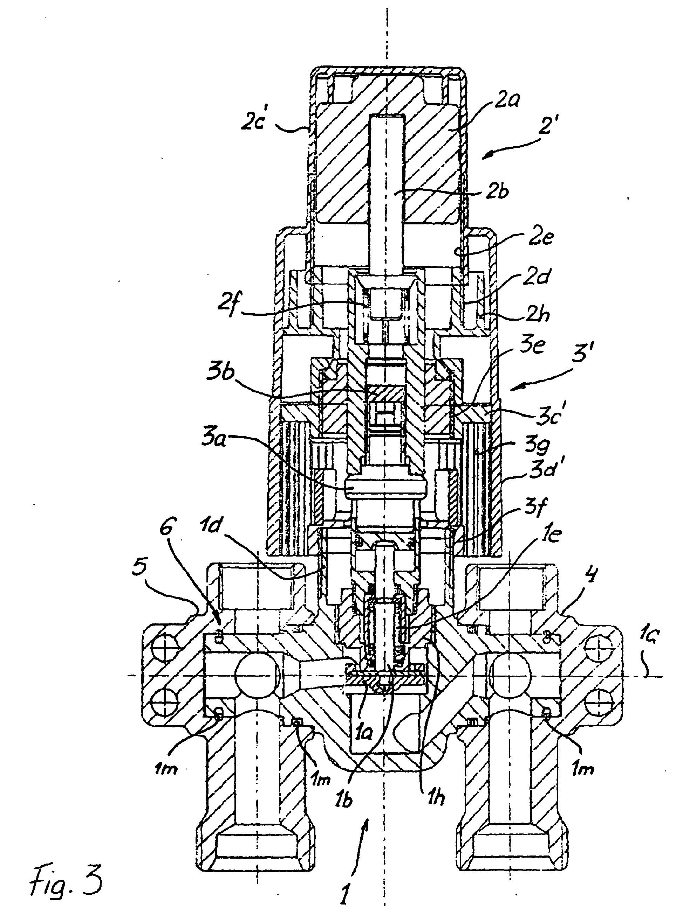

Bei einer zweiten in Fig. 3 dargestellten Ausführungsform des Ventils ist die Einstellkappe 2c' des Raumtemperaturfühlers 2' einstückig mit der Einstellhülse 3d' des Rücklauftemperaturfühlers 3' ausgeführt, so dass eine Drehung nur gemeinsam erfolgen kann. Die Einstellkappe 2c' ist wie beim ersten Ausführungsbeispiel drehbar von einem Gewinde 2d gehalten, in das sie mit einem Gegengewinde 2e eingreift. Das Gewinde 2d ist an einem am Stellring 3c' sich abstützenden Stützring 2h vorgesehen. Bei einer Drehung der Einstellkappe 2c' verschiebt sich diese gemeinsam mit der Einstellhülse 3d' in ihrer Achsrichtung. Eine Verschiebung der Einstellhülse 3d' gegenüber dem unverschieblichen Stellring 3c' wird durch eine auf seinem Außenumfang vorgesehene Verzahnung ermöglicht, die in eine Innenverzahnung 3g an der Einstellhülse 3d' eingreift.

Die Einstellhülse 3d' nimmt bei ihrer Drehung den Stellring 3c' mit, so dass sich das Widerlager 3b über die Gewindeverbindung 3e in Achsrichtung verstellen kann. Das Maß der Verstellung hängt dabei von der Gewindesteigung ab, so dass eine unterschiedlich große Verstellung von Druckglied 2b und Dehnkörper 3a gewählt werden kann. Im übrigen entspricht das Ventil in der Ausführung der Fig. 3 dem der Ausführung in Fig. 2 und soll hier nicht nochmals beschrieben werden.

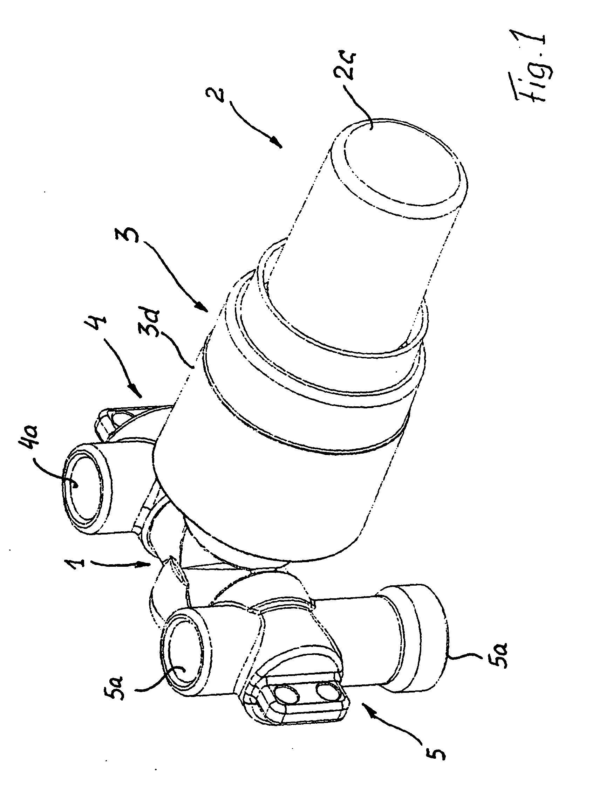

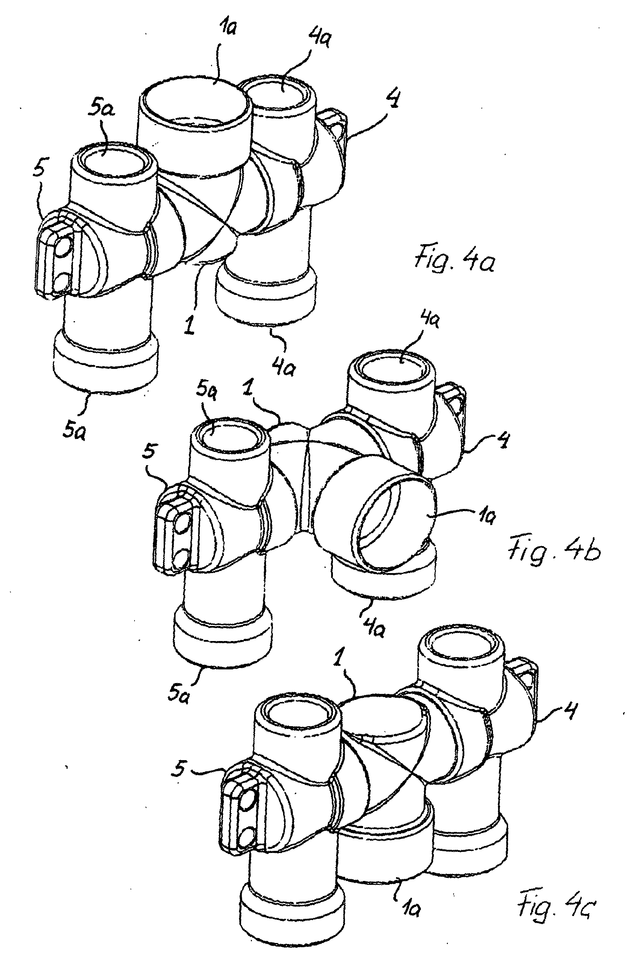

In Fig. 4a bis 4c ist das Ventilgehäuse 1 mit den Anschlussstücken 4 und 5 in unterschiedlichen Schwenkstellungen des Anschlussstutzens 1a dargestellt. Die Stellung des Anschlussstutzens 1a in Fig. 4a entspricht den Darstellungen in Fig. 1 und 2. Die Drehachsen von Raumtemperaturfühler 2 und Rücklauftemperaturfühler 3 sowie die Achsen der Ein- und Auslassbohrungen 4a und 5a liegen in einer Ebene. Dabei wird die Heizflüssigkeit beispielsweise durch die Einlassbohrung 4a zugeführt, durchströmt das Ventilgehäuse 1 in etwa horizontaler Richtung und tritt aus der Auslassbohrung 5a aus, wobei sie durch die Durchgangsbohrungen 1g in das Ventilgehäuse 1 einund austritt. Die Durchgangsbohrungen 1f sind durch die Anschlussstücke 4 und 5 verschlossen.

Das in Fig. 4b dargestellte Ventilgehäuse 1 ist gegenüber den Anschlussstücken 4 und 5 um 90° aus der Zeichnungsebene herausgeschwenkt. In dieser Stellung fluchten die Durchgangsbohrungen 1f mit den Ein- und Auslassbohrungen 4a und 5a. Die Durchgangsbohrungen 1g sind durch die Anschlussstücke 4 und 5 verschlossen. Bei einer Drehung des Ventilgehäuses 1 um die Schwenkachse 1c um 180° sind, wie in Fig. 4c gezeigt, alle Durchgangsbohrungen 1f und 1g verschlossen. In dieser Stellung können beispielsweise Montagearbeiten an der Heizungsanlage vorgenommen werden, ohne dass das Heizwasser vollständig abgelassen werden muss.

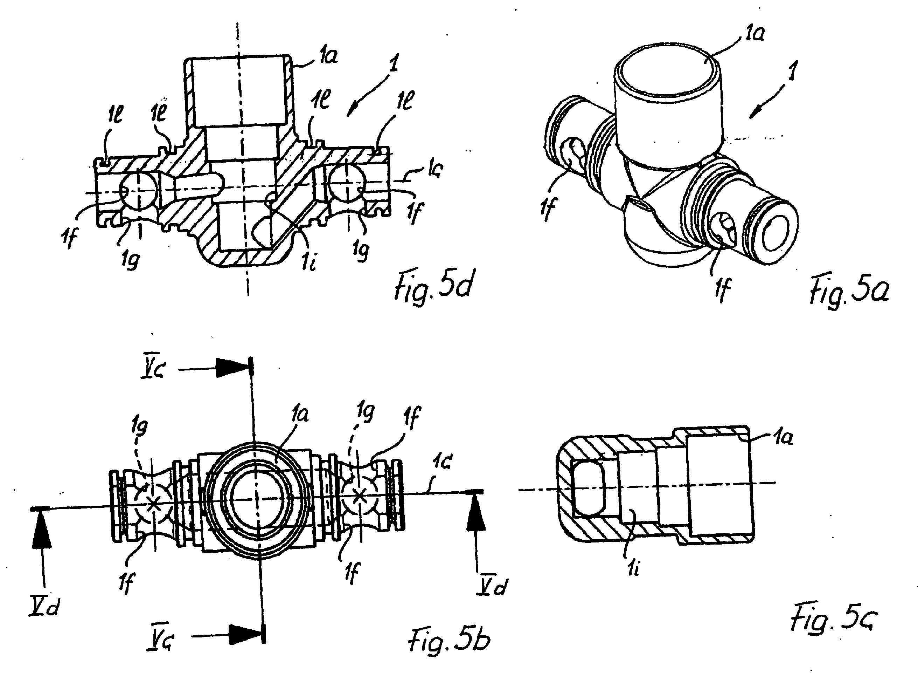

Die Lagerung des Ventilgehäuses 1 in den Einlass- und Auslass-Anschlusstücken 4 und 5 sind als Drehdurchführungen 6 ausgebildet. Die Drehdurchführungen 6 sind, wie aus Fig. 5a bis 5d ersichtlich, durch jeweils zwei konzentrisch zur Schwenkachse 1c verlaufende Ringnuten 11 gebildet, in die Dichtringe 1m eingelegt sind. Bei vollständig quer zur Schwenkachse 1c durch das Ventilgehäuse 1 hindurchführenden Durchgangsbohrungen 1f können gleichzeitig zwei an einander gegenüberliegende Einlassbohrungen 4a und Auslassbohrungen 5a angeschlossene Heizkreise mit dem Ventil geregelt werden.

## Patentansprüche

1. Ventil für Heizungsanlagen, insbes. Fussbodenheizungen, mit einem Kombifühlerkopf (2, 3; 2', 3'), der einen Raumtemperaturfilhler (2; 2') und einen Rücklauftemperaturfühler (3; 3') umfasst, deren Dehnkörper (2a, 3a) unabhängig voneinander auf einen gemeinsamen, verschieblich im Ventilgehäuse (1) geführten Ventilschaft (1b) einwirken, wobei der Dehnkörper (3a) des Rücklauftemperaturfühlers (3; 3') sich an einem Widerlager (3b) abstützt, das mittels eines Stellrings (3c; 3c') in Achsrichtung des Ventilschaftes (1b) einstellbar ist, und ein auf den Ventilschaft (1b) wirkendes Druckglied (2b) des Raumtemperaturfühlers (2; 2') durch die Drehung der Einstellkappe (2c; 2c') des Raumtemperaturfühlers (2; 2') in Achsrichtung verstellbar ist, wobei das Druckglied (2b) koaxial zum Dehnkörper (3a) des Rücklauftemperaturfühlers (3) und koaxial zum Ventilschaft (1b) angeordnet ist,
**dadurch gekennzeichnet,**
**dass** der Stellring (3c; 3c') mit einer Einstellhülse (3d; 3d') in Eingriff steht, deren Drehung die Verlagerung des Widerlagers (3b) in Achsrichtung des Ventilschaftes (1b) bewirkt.

2. Ventil nach Anspruch 1,
**dadurch gekennzeichnet,**
**dass** die axiale Verlagerung des undrehbar gehaltenen Widerlagers (3b) durch eine Gewindeverbindung (3e) zwischen unverschieblichem Stellring (3c; 3c') und Widerlager (3b) bewirkt wird und die Verlagerung des Druckgliedes (2b) durch ein am Stellring (3c; 3c') sich abstützendes Gewinde (2d), in das der Raumtemperaturfühler (2; 2') mit einem Gegengewinde (2e) eingreift.

3. Ventil nach Anspruch 1 oder 2
**dadurch gekennzeichnet,**
**dass** die Einstellkappe (2c) des Raumtemperaturfühlers (2) an der Einstellhülse (3d) drehbar geführt und gegenüber dieser verlagerbar ist.

4. Ventil nach Anspruch 1 oder 2
**dadurch gekennzeichnet,**
**dass** die Einstellhülse (3d') mit der Einstellkappe (2c') undrehbar verbunden ist und gegenüber dem Stellring (3c') eine axiale Verschiebung zulässt.

5. Ventil nach mindestens einem der Ansprüche1, 2 oder 4,
**dadurch gekennzeichnet,**
**dass** die Einstellkappe (2c') und die Einstellhülse (3d') als einheitliches Kunststoff-Spritzgussteil herstellbar ist.

6. Ventil nach mindestens einem der Ansprüche 1 ,2, 4 oder 5,
**dadurch gekennzeichnet,**
**dass** die Verstellung des Widerlagers (3b) zwangsläufig proportional zur Verstellung des Druckgliedes (2b) erfolgt.

7. Ventil nach Anspruch 6,
**dadurch gekennzeichnet,**
**dass** die Gewindeverbindung (3e) zwischen Stellring (3c') und Widerlager (3b) und das Gewinde (2d) am Raumtemperaturfühler (2') unterschiedliche Steigungen aufweisen, deren Unterschied der Proportionalität der verstellung von Widerlager (3b) und Druckglied (2b) entspricht.

8. Ventil nach mindestens einem der Ansprüche 1 bis 7,
**dadurch gekennzeichnet,**
**dass** das Ventilgehäuse (1) mit dem daran befestigten Kombifühlerkopf (2, 3; 2',3') um eine Schwenkachse (1c) schwenkbar in Anschlussstücken (4; 5) von Ein- und Auslass des Ventilgehäuses (1) gelagert ist.

9. Ventil nach Anspruch 8,
**dadurch gekennzeichnet,**
**dass** die Schwenkachse (1c) rechtwinklig zur Achsrichtung des Ventilschaftes (1b) verläuft.

10. Ventil nach Anspruch 8 und 9,
**dadurch gekennzeichnet,**
**dass** die beiden Einlass und Auslass aufnehmenden Enden des Ventilgehäuses (1) als Drehdurchführungen (6) ausgebildet sind.

11. Ventil nach mindestens einem der Ansprüche 8 bis 10,
**dadurch gekennzeichnet,**
**dass** die Enden des Ventilgehäuses (1) jeweils zwei radial zur Schwenkachse (1c) des Ventilgehäuses (1) verlaufende Durchgangsbohrungen (1f; 1g) aufweisen, von denen jeweils mindestens eine in Abhängigkeit von der Schwenkstellung des Ventilgehäuses (1) durch die Anschlussstücke (4; 5) versperrt ist.

12. Ventil nach mindestens einem der Ansprüche 8 bis 11,
**dadurch gekennzeichnet,**
**dass** in einer Schwenkstellung des Ventilgehäuses (1) alle Durchgangsbohrungen (1f; 1g) versperrt sind.

13. Ventil nach mindestens einem der Ansprüche 8 bis 12,
**dadurch gekennzeichnet,**
**dass** die Anschlussstücke (4; 5) jeweils mindestens zwei unterschiedliche Einlass- (4a) und Auslassbohrungen (5a) für durch dasselbe Ventil geregelte, getrennte Heizkreisläufe mit unterschiedlichen Zu- bzw. Ablaufrichtungen aufweisen.

14. Ventil nach mindestens einem der Ansprüche1 bis 8,
**dadurch gekennzeichnet,**
**dass** das Ventilgehäuse (1) mit den Anschlussstücken (4; 5) fest verbunden ist und zwei radial zur Durchströmrichtung verlaufende Anschlussstutzen (1d) zur Befestigung des Kombifühlerkopfes (2, 3; 2' 3') aufweist, von denen jeweils eine verschließbar ist.

15. Ventil nach Anspruch 14,
**dadurch gekennzeichnet,**
**dass** die Anschlussstutzen (1d) unter 90° versetzt zueinander angeordnet sind.

## Claims

1. Valve for heating assemblies, in particular floor heating systems, having a combined sensor head (2, 3; 2', 3') which comprises a room temperature sensor (2; 2') and a return flow temperature sensor (3; 3'), whose expansion members (2a, 3a) act independently of each other on a common valve shaft (1b) which is guided so as to be able to be displaced in the valve housing (1), the expansion member (3a) of the return flow temperature sensor (3; 3') being supported on an abutment (3b) which can be adjusted in the axial direction of the valve shaft (1b) by means of an adjusting ring (3c; 3c'), and a pressing member (2b) of the room temperature sensor (2; 2') acting on the valve shaft (1b) being able to be adjusted in the axial direction by rotating the adjusting cover (2c; 2c') of the room temperature sensor (2; 2'), the pressing member (2b) being arranged coaxially relative to the expansion member (3a) of the return temperature sensor (3) and coaxially relative to the valve shaft (1b),
**characterised in that**
the adjusting ring (3c; 3c') is in engagement with an adjusting sleeve (3d; 3d') whose rotation brings about the displacement of the abutment (3b) in the axial direction of the valve shaft (1b).

2. Valve according to claim 1,
**characterised in that**
the axial displacement of the abutment (3b) which is retained in a non-rotatable manner is brought about by means of a threaded connection (3e) between the non-displaceable adjusting ring (3c; 3c') and abutment (3b), and the displacement of the pressing member (2b) is brought about by a thread (2d) which is supported on the adjusting ring (3c; 3c') and in which the room temperature sensor (2; 2') engages with a counter-thread (2e).

3. Valve according to claim 1 or 2,
**characterised in that**
the adjusting cover (2c) of the room temperature sensor (2) is rotatably guided on the adjusting sleeve (3d) and can be displaced relative thereto.

4. Valve according to claim 1 or 2,
**characterised in that**
the adjusting sleeve (3d') is connected to the adjusting cover (2c') in a non-rotatable manner and allows an axial displacement relative to the adjusting ring (3c').

5. Valve according to at least any one of claims 1, 2 or 4,
**characterised in that**
the adjusting cover (2c') and the adjusting sleeve (3d') can be produced as an integral injection-moulded component of plastics material.

6. Valve according to at least any one of claims 1, 2, 4, or 5,
**characterised in that**
the adjustment of the abutment (3b) is necessarily carried out proportionally relative to the adjustment of the pressing member (2b).

7. Valve according to claim 6,
**characterised in that**
the threaded connection (3e) between the adjusting ring (3c') and abutment (3b) and the thread (2d) on the room temperature sensor (2') have different pitches whose difference corresponds to the proportionality of the adjustment of the abutment (3b) and the pressing member (2b).

8. Valve according to at least any one of claims 1 to 7,
**characterised in that**
the valve housing (1) with the combined sensor head (2, 3; 2', 3') which is fixed thereto is supported so as to be able to be pivoted about a pivot axis (1c) in connection pieces (4; 5) of the inlet and outlet of the valve housing (1).

9. Valve according to claim 8,
**characterised in that**
the pivot axis (1c) extends at right-angles to the axial direction of the valve shaft (1b).

10. Valve according to claim 8 and 9,
**characterised in that**
the two ends of the valve housing (1) receiving the inlet and outlet are constructed as rotary transmission feedthroughs (6).

11. Valve according to at least any one of claims 8 to 10,
**characterised in that**
the ends of the valve housing (1) each have two through-holes (1f; 1g) which extend radially relative to the pivot axis (1c) of the valve housing (1) and of which at least one is in each case blocked by the connection pieces (4; 5) depending on the pivot position of the valve housing (1).

12. Valve according to at least any one of claims 8 to 11,
**characterised in that**
all through-holes (1f; 1g) are blocked when the valve housing (1) is in one pivot position.

13. Valve according to at least any one of claims 8 to 12,
**characterised in that**
the connection pieces (4; 5) each have at least two different inlet holes (4a) and outlet holes (5a) for separate heating circuits which are controlled by the same valve and which have different supply and discharge directions.

14. Valve according to at least any one of claims 1 to 8,
**characterised in that**
the valve housing (1) is fixedly connected to the connection pieces (4; 5) and has two connection pieces (1d) which extend radially relative to the flow direction for fixing the combined sensor head (2, 3; 2' 3') and of which one can be closed in each case.

15. Valve according to claim 14,
**characterised in that**
the connection pieces (1d) are arranged offset at 90° relative to each other.

## Revendications

1. Soupape pour installations de chauffage, en particulier de chauffage au sol, comportant une tête de sonde combinée (2, 3 ; 2', 3') qui comprend une sonde de température ambiante (2 ; 2') et une sonde de température de retour (3 ; 3') dont les corps de dilatation (2a, 3a) agissent, indépendamment l'un de l'autre, sur une tige de soupape (1b) commune, guidée coulissante dans le boîtier de soupape (1), le corps de dilatation (3a) de la sonde de température de retour (3 ; 3') prenant appui sur une butée (3b) qui est réglable au moyen d'une bague de réglage (3c ; 3c') dans la direction de l'axe de la tige de soupape (1b), et un organe de pression (2b), agissant sur la tige de soupape (1b), de la sonde de température ambiante (2 ; 2'), étant déplaçable dans la direction axiale sous l'effet de la rotation du capot de réglage (2c ; 2c') de la sonde de température ambiante (2 ; 2'), l'organe de pression (2b) étant disposé coaxialement au corps de dilatation (3a) de la sonde de température de retour (3) et coaxialement à la tige de soupape (1b),
**caractérisée**
**en ce que** la bague de réglage (3c ; 3c') est en prise avec une douille de réglage (3d ; 3d') dont la rotation provoque le déplacement de la butée (3b) dans la direction axiale de la tige de soupape (1b).

2. Soupape selon la revendication 1,
**caractérisée**
**en ce que** le déplacement axial de la butée (3b) maintenue non tournante est provoqué par une liaison filetée (3e) entre la bague de réglage (3c ; 3c') non coulissante et la butée (3b), et le déplacement de l'organe de pression (2b) par un filetage (2d) prenant appui contre la bague de réglage (3c ; 3c') dans lequel s'engage la sonde de température ambiante (2 ; 2') par un contre-filetage (2e).

3. Soupape selon la revendication 1 ou 2,
**caractérisée**
**en ce que** le capot de réglage (2c) de la sonde de température ambiante (2) est guidé tournant sur la douille de réglage (3d) et est déplaçable par rapport à celle-ci.

4. Soupape selon la revendication 1 ou 2,
**caractérisée**
**en ce que** la douille de réglage (3d') est reliée de manière à pouvoir tourner avec le capot de réglage (2c') et autorise un coulissement axial par rapport à la bague de réglage (3c').

5. Soupape selon l'une au moins des revendications 2 ou 4,
**caractérisée**
**en ce que** le capot de réglage (2c') et la douille de réglage (3d') peuvent être fabriqués sous la forme d'une unique pièce en matière plastique moulée par injection.

6. Soupape selon l'une au moins des revendications1, 2, 4 ou 5,
**caractérisée**
**en ce que** le déplacement de la butée (3b) s'effectue forcément de manière proportionnelle au déplacement de l'organe de pression (2b).

7. Soupape selon la revendication 6,
**caractérisée**
**en ce que** la liaison filetée (3e) entre la bague de réglage (3c') et la butée (3b) et le filetage (2d) sur la sonde de température ambiante (2') présentent des pas différents dont la différence correspond à la proportionnalité du déplacement de la butée (3b) et de l'organe de pression (2b).

8. Soupape selon l'une au moins des revendications 1 à 7,
**caractérisée**
**en ce que** le boîtier de soupape (1) avec la tête de sonde combinée (2, 3 ; 2', 3') fixée sur celui-ci est monté de manière à pouvoir pivoter autour d'un axe de pivotement (1c) dans des pièces de raccordement (4 ; 5) de l'entrée et de la sortie du boîtier de soupape (1).

9. Soupape selon la revendication 8,
**caractérisée**
**en ce que** l'axe de pivotement (1c) s'étend perpendiculairement à la direction axiale de la tige de soupape (1b).

10. Soupape selon les revendications 8 et 9,
**caractérisée**
**en ce que** les deux extrémités du boîtier de soupape (1), recevant l'entrée et la sortie, sont réalisées sous la forme de passages tournants (6).

11. Soupape selon l'une au moins des revendications 8 à 10,
**caractérisée**
**en ce que** les extrémités du boîtier de soupape (1) présentent chacune deux trous débouchants (1f ; 1g) s'étendant radialement par rapport à l'axe de pivotement (1c) du boîtier de soupape (1), dont un au moins est fermé par les pièces de raccordement (4 ; 5) en fonction de la position de pivotement du boîtier de soupape (1).

12. Soupape selon l'une au moins des revendications 8 à 11,
**caractérisée**
**en ce que** tous les trous débouchants (1f ; 1g) sont fermés dans une position de pivotement du boîtier de soupape (1).

13. Soupape selon l'une au moins des revendications 8 à 12,
**caractérisée**
**en ce que** les pièces de raccordement (4, 5) présentent chacune au moins deux trous d'entrée (4a) et de sortie (5a) différents pour des circuits de chauffage séparés, régulés par la même soupape, avec des sens d'arrivée ou d'écoulement différents.

14. Soupape selon l'une au moins des revendications 1 à 8,
**caractérisée**
**en ce que** le boîtier de soupape (1) est solidaire des pièces de raccordement (4 ; 5) et comporte deux tubulures de raccordement (1d) s'étendant radialement par rapport à la direction d'écoulement, pour la fixation de la tête de sonde combinée (2, 3 ; 2', 3') dont une peut être fermée à la fois.

15. Soupape selon la revendication 14,
**caractérisée**
**en ce que** les tubulures de raccordement (1d) sont disposées décalées de 90° l'une par rapport à l'autre.
